# EUROPEAN PATENT SPECIFICATION

(11) **EP 2 282 041 B1**
(45) Date of publication and mention of the grant of the patent: **06.06.2018**
(21) Application number: 10168105.4
(22) Date of filing: 01.07.2010
(51) Int. Cl.: F02D 41/40, F02D 41/30, F02B 23/06, F02B 1/12, F02M 45/02

(54) **Fuel injection control apparatus with pre- and post-injection**
Kraftstoffeinspritzsteuervorrichtung mit Vor- und Nach-Einspritzung
Appareil de contrôle d'injection de carburant avec pré- et post-injection

(30) Priority: 07.08.2009 JP 2009184243
(43) Date of publication of application: 09.02.2011
(73) Proprietor: Kabushiki Kaisha Toyota Jidoshokki, Kariya-shi, Aichi 448-8671 (JP)
(72) Inventor: Kuzuyama, Hiroshi, Kariya-shi Aichi 448-8671 (JP); Machida, Masahiro, Kariya-shi Aichi 448-8671 (JP)
(74) Representative: TBK

(56) References cited:
- EP-A1- 1 348 854
- EP-A1- 1 701 027
- EP-A1- 1 806 493
- DE-A1-102005 051 740
- US-A1- 2005 224 606

## Description

### BACKGROUND OF THE INVENTION

### 1. Field of the Invention

The present invention relates to a fuel injection control apparatus, and more particularly to a fuel injection control apparatus for a premixed compression ignition diesel engine.

### 2. Description of the Related Art

Japanese Patent Application Publication No. 2002-180881 describes a combustion control apparatus that is used in a premixed diesel engine to improve the homogeneity of an air-fuel pre-mixture. Under predetermined engine operating conditions, this combustion control apparatus implements early injection in a predetermined period extending from the beginning of an intake stroke to the vicinity of top dead center of a compression stroke, favorably to a cylinder prior to 60° before compression top dead center, such that at least a part of the fuel is supplied, and the early injection fuel is injected after being divided into a plurality of portions. When the early injection fuel is injected after being divided into a plurality of portions, the amount of the fuel injected in each injection decreases, which is advantageous in terms of atomization and intermixing with air, and therefore a highly uniform lean air-fuel pre-mixture can be formed. As a result, reductions in amounts of black smoke and hydrocarbons (HC) generated are achieved. Note that in this combustion control apparatus, a fuel injection valve having a narrow cone angle (an injection cone angle of 120° or less) is used to ensure that all of the early injection fuel is supplied to the combustion chamber.

Furthermore, a fuel injection control apparatus according to the preamble of claim 1 is known from EP 1 806 493 A1. Further fuel injection control apparatuses are known from EP 1 701 027 A1 and US 2005/224606 A1.

However, if a fuel injection valve having a narrow cone angle is used, air utilization may decrease at high loads, i.e. when a large amount of fuel is injected, leading to an increase in soot generation. Further, if the early injection fuel is injected after being divided into a plurality of portions at low loads, the combustibility may deteriorate, leading to a reduction in fuel efficiency.

### SUMMARY OF THE INVENTION

The present invention has been designed to solve these problems, and an object thereof is to provide a fuel injection control apparatus that realizes premixed compression ignition combustion with low HC generation and high fuel efficiency.

According to the present invention, the above object is solved with a fuel injection control apparatus having the features of claim 1.

### BRIEF DESCRIPTION OF THE DRAWINGS

In the accompanying drawings:
Fig. 1 is a constructional diagram of a diesel engine incorporating a fuel injection control apparatus according to an embodiment of the present invention;
Figs. 2A to 2C are views illustrating a relationship between injected fuel and the combustion chamber corresponding to the variation in piston position in the diesel engine incorporating the fuel injection control apparatus according to this embodiment; and
Fig. 3 is a view illustrating the fuel injection in the diesel engine incorporating the fuel injection control apparatus according to this embodiment.

### DETAILED DESCRIPTION OF THE PREFERRED EMBODIMENTS

An embodiment of the present invention will be described below on the basis of the attached drawings.

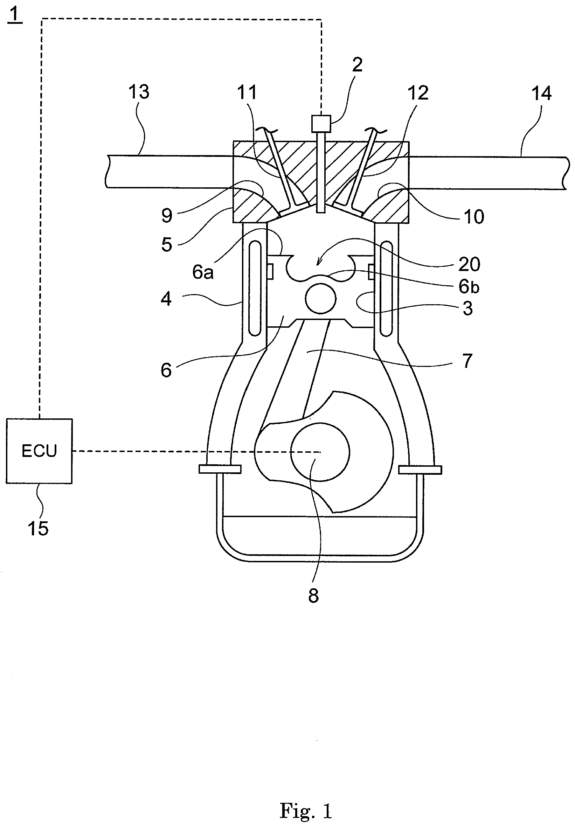

Fig. 1 shows a constructional diagram of a diesel engine incorporating a fuel injection control apparatus according to this embodiment. A diesel engine 1 includes cylinder block 4 having cylinders 3 in its interior. A cylinder head 5 is provided on the upper portion of cylinder block 4. A piston 6 is provided in cylinder 3 so as to be a reciprocatable and has a top surface 6a and inner surface 6b. One end of connecting rod 7 is connected to piston 6, and crankshaft 8 is connected to the other end of connecting rod 7. A combustion chamber 20 defined by top surface 6a and inner surface 6b of piston 6 is provided in piston 6. The combustion chamber 20 opens to cylinder 3. A fuel injection valve 2 for injecting a fuel (light oil) into cylinder 3 is provided in cylinder head 5. Further, intake valve 11 for opening and closing intake port 9 and exhaust valve 12 for opening and closing exhaust port 10 are provided in cylinder head 5. An intake passage 13 is connected to intake port 9, and exhaust passage 14 is connected to exhaust port 10. The diesel engine 1 is further provided with ECU 15 serving as a control apparatus, and ECU 15 is electrically connected to both a drive control apparatus, not shown, of crankshaft 8 and fuel injection valve 2.

Next, an operation of the diesel engine incorporating the fuel injection control apparatus according to this embodiment will be described.

When diesel engine 1 is started, intake valve 11 opens intake port 9 such that air flowing through intake passage 13 is sucked into cylinder 3. Next, intake valve 11 closes intake port 9 and piston 6 rises in cylinder 3, whereby a compression stroke for compressing the sucked air begins. In the compression stroke, ECU 15 injects fuel that has been divided into a plurality of portions into cylinder 3 through fuel injection valve 2 at the appropriate timing as described below. The injected fuel intermixes with the air in cylinder 3 to form an air-fuel mixture, whereupon the air-fuel mixture is compressed by piston 6 such that the pressure and temperature of the air-fuel mixture increase. When the temperature of the air-fuel mixture increases, the fuel auto-ignites, and as a result, combustion occurs in cylinder 3. The piston 6 is pushed downward by this combustion, and when piston 6 subsequently starts to rise again from bottom dead center, exhaust valve 12 opens such that the combustion gas in cylinder 3 is pushed out into exhaust passage 14. This reciprocating motion of piston 6 is converted into a rotating motion of crankshaft 8 via connecting rod 7, and as a result, output is obtained from diesel engine 1.

Next, the fuel injection control performed by the fuel injection control apparatus according to this embodiment will be described.

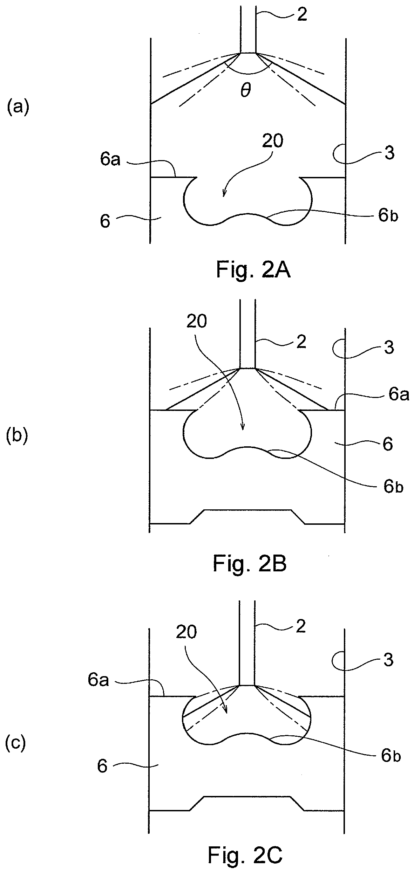

As shown in Fig. 2A, fuel injection valve 2 injects the fuel at predetermined injection cone angle θ (θ = 150°, for example). In actuality, the fuel is injected within a variation range of approximately θ ± 0.1θ (between the broken lines) rather than precisely at predetermined injection cone angle θ (solid line). Here, if the fuel injection valve 2 can be identified specifically, injection cone angle θ is a value that can be determined unambiguously.

As shown in Fig. 2A, if the fuel is injected from fuel injection valve 2 when the position of piston 6 within cylinder 3 is low, the fuel may not enter combustion chamber 20 directly but will adhere to the top surface 6a of piston 6 and the inner wall surface of cylinder 3. As shown in Fig. 2B, if piston 6 moves upward from the case shown in Fig. 2A, the fuel injected within the variation range of ±10% of predetermined injection cone angle θ among the fuel injected through fuel injection valve 2 may begin to enter the combustion chamber 20 directly at a position of piston 6 depending on injection cone angle θ and the size and shape of combustion chamber 20. This timing is defined as a first timing. As shown in Fig. 2C, if piston 6 rises further, all of the fuel injected within the variation range of ±10% of predetermined injection cone angle θ among the fuel injected through fuel injection valve 2 may enter combustion chamber 20 at a position of piston 6 depending on injection cone angle θ and the size and shape of combustion chamber 20. This timing is defined as a second timing. The piston 6 then rises further from the state shown in Fig. 2C so as to reach compression top dead center, and then begins to fall in cylinder 3. Note that in this embodiment, the first timing corresponds to a crank angle position of 28° before compression top dead center (hereafter, referred to as "-28° ATDC") and the second timing corresponds to a crank angle position of 18° before compression top dead center (hereafter, referred to as "-18° ATDC").

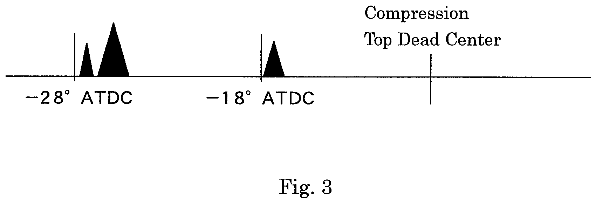

As shown in Fig. 3, during the compression stroke, fuel injection valve 2 injects a single portion of fuel immediately after -28° ATDC. Immediately after this injection, a second portion of fuel is injected as close as possible to the first injection without overlapping. Note that the amount of the fuel injected in the second injection takes a value obtained by subtracting the amount of the fuel injected in the first injection from the amount of fuel required to obtain the required torque, and this amount is larger than the amount of fuel injected in the first injection. As described above, at least a part of the fuel injected in these two injections (hereafter, referred to as "pre-injection") enters combustion chamber 20 directly (see Fig. 2B), and therefore the situation in which all of the injected fuel adheres to top surface 6a of piston 6 (see Fig. 2B) and the inner wall of cylinder 3 (see Fig. 2B) does not occur. Next, fuel injection valve 2 injects a single portion of fuel immediately after -18° ATDC. The amount of the fuel injected at this time is approximately double the amount of fuel injected in the first injection at -28° ATDC timing and smaller than the amount of fuel injected in the second injection at -28° ATDC timing. As described above, all of the fuel injected in this injection (hereafter, referred to as "post-injection") enters combustion chamber 20 directly, and therefore this fuel does not adhere to the top surface 6a of piston 6 or the inner wall of cylinder 3.

By injecting the fuel separately in the pre-injection and the post-injection, the amount of fuel injected in the respective injections decreases, and therefore the amount of fuel that adheres to the inner wall of cylinder 3 and top surface 6a of piston 6 in the pre-injection is reduced, thereby preventing the possibility of rapid combustion and a reduction in combustibility during the post-injection. Furthermore, by dividing the pre-injection into two injections, the amount of the fuel that adheres to the inner wall of cylinder 3 and top surface 6a of piston 6 is reduced even further. As a result, premixed compression ignition combustion with low HC generation and high fuel efficiency is realized.

By dividing the fuel injection from the fuel injection valve 2 into the pre-injection and the post-injection, and further dividing the pre-injection into two injections, and injecting a smaller amount of the fuel in the first injection than that in the second injection in this manner, the amount of fuel that adheres to the inner wall of cylinder 3 and top surface 6a of piston 6 in the pre-injection is reduced, thereby preventing the possibility of rapid combustion and a reduction in combustibility during the post-injection. As a result, premixed compression ignition combustion with low HC generation and high fuel efficiency can be realized.

In this embodiment, the pre-injection is divided into two injections, but the pre-injection is not limited to two injections and may be divided into three or more injections. However, the total amount of fuel injected in the second and subsequent injections must be greater than the amount of fuel injected in the first injection.

Further, the fuel is injected immediately after -28° ATDC and immediately after -18° ATDC, respectively, but the present invention is not limited to these timings. Instead, the fuel may be injected in two or more portions at an appropriate timing between -28° ATDC and -18° ATDC and then at an appropriate timing between -18° ATDC and compression top dead center. Note, however, that the fuel is preferably injected at timings that are as close as possible to -28° ATDC and -18° ATDC, respectively.

In this embodiment, -28° ATDC corresponds to the first timing and -18° ATDC corresponds to the second timing, but these numerical values are merely cited as examples. As described above, the first timing and second timing are determined in accordance with injection cone angle θ and the size and shape of combustion chamber 20. Note that ±10% of injection cone angle θ was set as the variation range of the fuel injected through fuel injection valve 2, but ±10% is also an example, and the variation range may be modified in accordance with the specifications of diesel engine 1.

In a compression stroke, fuel injection valve 2 injects a single portion of the fuel immediately after -28° ATDC. Immediately after this injection, a second portion of the fuel is injected as close as possible to the first injection without overlapping. The amount of the fuel injected in the second injection takes a value obtained by subtracting the amount of the fuel injected in the first injection from the amount of the fuel required to obtain a required torque, and this amount is larger than the amount of the fuel injected in the first injection. Next, fuel injection valve 2 injects a single portion of the fuel immediately after -18° ATDC. The amount of the fuel injected at this time is approximately double the amount of the fuel injected in the first injection at -28° ATDC timing and smaller than the amount of the fuel injected in the second injection.

## Claims

1. A fuel injection control apparatus (15) in a premixed compression ignition diesel engine (1) having a fuel injection valve (2) that injects a fuel in a plurality of portions into a cylinder (3), wherein the fuel spray forms a cone of a predetermined angle (Θ), a piston (6) that reciprocates within said cylinder (3), and a combustion chamber (20) defined by a top surface (6a) and an inner surface (6b) of said piston (6) open to said cylinder (3), provided in said piston (6),
second timing determining means for determining, in a compression stroke, a second timing at which all of the fuel injected through said fuel injection valve (2) enters said combustion chamber (20) in accordance with a position of said piston (6) within said cylinder (3) and a size and a shape of said combustion chamber (20), wherein
said fuel injection valve (2) injects the last portion of fuel from said second timing to a point at which said piston reaches compression top dead center, **characterized in that** the fuel injection apparatus further comprises
first timing determining means for determining, in a compression stroke, a first timing at which a part of the fuel injected through said fuel injection valve (2) begins to enter said combustion chamber (20) directly, in accordance with a position of said piston (6) within said cylinder (3) and a size and a shape of said combustion chamber (20), wherein
said fuel injection valve (2) injects a first portion and at least a second portion of the fuel from said first timing to said second timing, and
wherein the first portion of the fuel is smaller than the second portion of the fuel or than a sum total of the second and subsequent portions of the fuel injected from the first timing to said second timing.

2. The fuel injection control apparatus (15) according to claim 1, wherein the last portion of the fuel is smaller than the second portion of the fuel or than the sum total of the second and subsequent portions of the fuel injected from the first timing to said second timing.

3. The fuel injection control apparatus (15) according to claim 2, wherein the last portion of the fuel is larger than the first portion of the fuel.

## Patentansprüche

1. Kraftstoffeinspritzsteuergerät (15) in einer vorgemischkompressionszündenden Dieselkraftmaschine (1) mit einem Kraftstoffeinspritzventil (2), das einen Kraftstoff in einer Mehrzahl von Portionen in einen Zylinder (3) einspritzt, wobei der Kraftstoffstrahl einen Konus eines vorbestimmten Winkels (θ) bildet, einem Kolben (6), der sich in dem Zylinder (3) hin- und herbewegt, und einer Verbrennungskammer (20), die durch eine obere Fläche (6a) und eine innere Fläche (6b) des Kolbens (6), die zu dem Zylinder (3) offen ist, definiert ist, und in dem Kolben (6) vorgesehen ist,
einem zweiten Zeitgebungsbestimmungsmittel zum Bestimmen, in einem Kompressionstakt, einer zweiten Zeitgebung, bei der der gesamte durch das Kraftstoffeinspritzventil (2) eingespritzte Kraftstoff die Brennkammer (20) betritt, in Übereinstimmung mit einer Position des Kolbens (6) in dem Zylinder (3) und einer Größe und Form der Brennkammer (20), wobei
das Kraftstoffeinspritzventil (20) die letzte Portion Kraftstoff von der zweiten Zeitgebung zu einem Punkt einspritzt, zu dem der Kolben den oberen Kompressionstotpunkt erreicht, **dadurch gekennzeichnet, dass** das Kraftstoffeinspritzgerät ferner aufweist:
erste Zeitgebungsbestimmungsmittel zum Bestimmen, in einem Kompressionstakt, einer ersten Zeitgebung, zu der ein Teil des durch das Kraftstoffeinspritzventil (2) eingespritzten Kraftstoffs damit beginnt, die Brennkammer (20) direkt zu betreten, in Übereinstimmung mit einer Position des Kolbens (6) innerhalb des Zylinders (3) und einer Größe und Form der Brennkammer (20), wobei
das Kraftstoffeinspritzventil (2) eine erste Portion und zumindest eine zweite Portion des Kraftstoffs von der ersten Zeitgebung zu der zweiten Zeitgebung einspritzt, und
wobei die erste Portion des Kraftstoffs kleiner als die zweite Portion des Kraftstoffs oder als eine Gesamtsumme der zweiten und nachfolgenden Portionen des von der ersten Zeitgebung zu der zweiten Zeitgebung eingespritzten Kraftstoffs ist.

2. Kraftstoffeinspritzsteuergerät (15) gemäß Anspruch 1, wobei die letzte Portion des Kraftstoffs kleiner als die zweite Portion des Kraftstoffs oder als die Gesamtsumme der zweiten und nachfolgenden Portionen des von der ersten Zeitgebung zu der zweiten Zeitgebung eingespritzten Kraftstoffs ist.

3. Kraftstoffeinspritzsteuergerät (15) gemäß Anspruch 2, wobei die letzte Portion des Kraftstoffs größer als die erste Portion des Kraftstoffs ist.

## Revendications

1. Appareil de commande d'injection de carburant (15) dans un moteur diesel à allumage par compression pré-mélangée (1) ayant une soupape d'injection de carburant (2) qui injecte un carburant dans une pluralité de parties dans un cylindre (3), dans lequel le jet de carburant forme un cône d'un angle prédéterminé (Θ), un piston (6) qui effectue un mouvement de va-et-vient à l'intérieur dudit cylindre (3), et une chambre de combustion (20) définie par une surface supérieure (6a) et une surface interne (6b) dudit piston (6) ouvert sur ledit cylindre (3), prévue dans ledit piston (6),
des seconds moyens de détermination de temporisation pour déterminer, dans une course de compression, une seconde temporisation à laquelle la totalité du carburant injecté par ladite soupape d'injection de carburant (2) pénètre dans ladite chambre de combustion (20) selon une position dudit piston (6) à l'intérieur dudit cylindre (3) et une taille et une forme de ladite chambre de combustion (20), dans lequel :
ladite soupape d'injection de carburant (2) injecte la dernière partie du carburant à partir de ladite seconde temporisation jusqu'à un point auquel ledit piston atteint le point mort haut de compression, **caractérisé en ce que** l'appareil d'injection de carburant comprend en outre :
des premiers moyens de détermination de temporisation pour déterminer, dans une course de compression, une première temporisation à laquelle une partie du carburant injecté par ladite soupape d'injection de carburant (2) commence à pénétrer dans ladite chambre de combustion (20) directement, selon une position dudit piston (6) à l'intérieur dudit cylindre (3) et une taille et une forme de ladite chambre de combustion (20), dans lequel :
ladite soupape d'injection de carburant (2) injecte une première partie et au moins une seconde partie du carburant de ladite première temporisation à ladite seconde temporisation, et
dans lequel la première partie du carburant est inférieure à la seconde partie du carburant ou à une somme totale de la seconde partie et des parties consécutives du carburant injecté de la première temporisation à ladite seconde temporisation.

2. Appareil de commande d'injection de carburant (15) selon la revendication 1, dans lequel la dernière partie du carburant est inférieure à la seconde partie du carburant ou à la somme totale de la seconde partie et des parties consécutives du carburant injecté de ladite première temporisation à ladite seconde temporisation.

3. Appareil de commande d'injection de carburant (15) selon la revendication 2, dans lequel la dernière partie du carburant est supérieure à la première partie du carburant.
